# EUROPEAN PATENT APPLICATION

(11) **EP 3 812 935 A1**
(43) Date of publication of application: **28.04.2021**
(21) Application number: 20201647.3
(22) Date of filing: 13.10.2020
(51) Int. Cl.: G06F 21/44, G06F 21/64, H04L 9/32, B64F 5/00

(54) **PROCESS AND METHOD FOR LONG-TERM FILE VALIDITY IN DISCONNECTED ENVIRONMENTS**

(30) Priority: 23.10.2019 US 201916661857
(71) Applicant: Honeywell International Inc., Charlotte, NC 28202 (US)
(72) Inventor: RAMANA, Kovalan, Charlotte, NC 28202 (US); MUDIMALA, Raveendra Reddy, Charlotte, NC 28202 (US); KUMAR, G V Bharath, Charlotte, NC 28202 (US); POTHULA, Phani Ammi Raju, Charlotte, NC 28202 (US)
(74) Representative: Dennemeyer & Associates S.A.

(57) **Abstract**

Embodiments of the present disclosure provide computer systems, computer apparatuses, computer methods, and computer program products for generating long term file validity for an input file and validating the same.

## Description

### BACKGROUND

Conventional aircrafts operate, or are controlled, using roughly 500 pieces of software, each of which may require an update at any given time. Computer security threats are rampant in today's world and therefore it is imperative that each piece of software or software update loaded onto an aircraft is validated to ensure that is has not been tampered with. Validating a piece of software usually involves checking security features against online databases or communicating with online security authorities which requires connectivity. However, aircrafts routinely operate in a disconnected environment and are therefore unable to validate new software or updates without connectivity.

Through applied effort, ingenuity, and innovation, many of these identified problems have been solved by developing solutions that are included in embodiments of the present invention, many examples of which are described in detail herein.

### BRIEF SUMMARY

Embodiments are directed to methods, systems, apparatuses, and computer program products for an apparatus configured to generate a crate file with an input file and validating the same in a disconnected environment. The apparatus comprises a processor, and a memory associated with the processor having computer coded instructions therein, with the computer coded instructions configured to, when executed by the processor, cause the apparatus to generate a crate file with an input file and validate the same.

In embodiments, the apparatus is configured to generate a crate file with an input file. In embodiments, the input file comprises a loadable software aircraft part (LSAP).

In embodiments, the apparatus is configured to receive an input file.

In embodiments, the apparatus is configured to determine the validity of a public certificate associated with the input file signature and retrieve a certificate revocation list (CRL) from a certificate authority. In embodiments, the validity of the public certificate associated with the input file signature is determined via an online certificate status protocol (OCSP) or by querying a certificate revocation list (CRL). In embodiments, the validity of the public certificate associated with the input file signature is determined via an online certificate status protocol (OCSP) if there is connectivity. In embodiments, a OCSP response is received from a certificate authority.

In embodiments, the apparatus is configured to generate an input file signature associated with the input file.

In embodiments, the apparatus is configured to generate a time stamp request file comprising the input file signature, the public certificate, and the CRL. In embodiments, the apparatus configured to transmit the time stamp request file to a time stamp authority. In embodiments, the time stamp response comprises a time stamp token. In embodiments, the time stamp token comprises a digest payload and a digest generation time. In embodiments, the apparatus is configured to receive a time stamp response from the time stamp authority.

In embodiments, the apparatus is configured to generate a crate file comprising the input file, the input file signature, the public certificate, the CRL, and the time stamp response.

In embodiments, the crate file is generated by compressing input file, the input file signature, the public certificate, the CRL, and the time stamp response into a compressed file.

In embodiments, the apparatus is configured to validate an input file.

In embodiments, the apparatus is configured to retrieve a crate file comprising an input file, an input file signature, a public certificate, a CRL, and a time stamp response. In embodiments, the input file comprises a loadable software aircraft part (LSAP).

In embodiments, the apparatus is configured to determine that a time stamp response associated with the input file is valid based at least in part on a digital signature of a time stamp authority used to generate the time stamp response.

In embodiments, the apparatus is configured to query a certificate revocation list (CRL) associated with the input file for a public certificate associated with the input file.

In embodiments, upon determining that the public certificate associated with the input file does not appear within the CRL associated with the input file and upon confirming that an input file signature associated with the input file matches the public certificate associated with the input file, the apparatus is configured to determine that the input file is valid.

In embodiments, the apparatus is configured to execute the LSAP on an aircraft system.

### BRIEF DESCRIPTION OF THE SEVERAL VIEWS OF THE DRAWINGS

Having thus described the invention in general terms, reference will now be made to the accompanying drawings, which are not necessarily drawn to scale.
**FIG. 1** illustrates an exemplary system for generating a crate file with a LSAP and validating the same, according to embodiments of the present disclosure.
**FIG. 2** illustrates an exemplary crate generator system for use with embodiments disclosed herein.
**FIG. 3** illustrates an exemplary data loader apparatus for use with embodiments disclosed herein.
**FIG. 4** illustrates a flowchart illustrating exemplary operations of a crate generator system for use with embodiments of the present disclosure.
**FIG. 5** illustrates a flowchart illustrating exemplary operations of a data loader for use with embodiments of the present disclosure.
**FIG.** 6 illustrates an example data flow attributable to generating a crate file according to one embodiment.

### DETAILED DESCRIPTION

Various embodiments of the inventions now will be described more fully hereinafter, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "exemplary" are used to be examples with no indication of quality level.

The terms "LSAP" or "loadable software aircraft part (LSAP)" refer to software that is necessary to configure a corresponding piece of aircraft hardware. LSAP also includes data and updates to existing software.

The term "crate file" refers to a file package comprising an input file and a series of documents associated with the input file that can be used to validate the input file. In embodiments, a crate file comprises an input file, a signature associated with an input file, a public certificate associated with the input file, a certificate revocation list (CRL) from a certificate authority, and a time stamp response from a time stamp authority.

Conventionally, validity of a LSAP is limited to the validity of its public certificate, which is generally 1 year. As a result, an Original Equipment Manufacturer (OEM) must revalidate and reload software annually. Annual maintenance results in increased maintenance costs and equipment down time. Furthermore, validating software to ensure that it has not been tampered with requires network connectivity to check that the public certificate associated with the software is valid, and aircrafts often operate in the absence of network connectivity.

Embodiments of the present disclosure overcome the aforementioned annual public certificate maintenance by providing means to generate a long-term file validity for an input file. In embodiments, the long-term file validity is at least 15 years. In embodiments, the long-term file validity is based on the validity of the time stamp associated with the crate file.

Embodiments of the present disclosure overcome the aforementioned challenges associated with the disconnected environment of an aircraft by validating an input file in a disconnected environment based at least in part on the crate file. In embodiments, the crate file comprises a signature associated with the input file, a public certificate associated with the input file, a certificate revocation list (CRL) associated with the input file, and a time stamp response from a time stamp authority. The CRL comprises a list of list of digital certificates that has been revoked by a certificate authority. The CRL can be retrieved from a certificate authority. In embodiments, the input file comprises a LSAP.

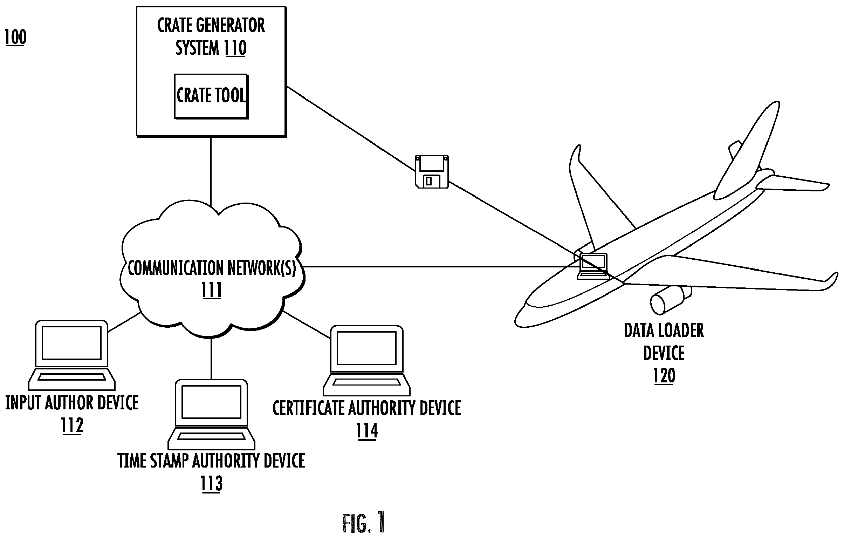

**FIG. 1** illustrates an exemplary system 100 for generating a crate file associated with a LSAP and validating the same, according to embodiments of the present disclosure.

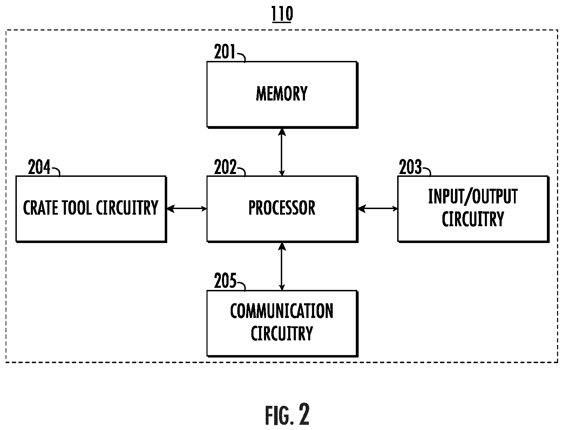

The exemplary system 100 comprises a crate generator system 110 that may comprise one or more computing apparatuses, such as apparatus 110 shown in FIG. 2 , for generating a crate file with an input file. The crate generator system 110 may be in communication with one or more devices such as an input author device 112, a time stamp authority device 113, a certificate authority device 114, and/or a data loader device 120 via one or more communication networks 111. In embodiments, the data loader device 120 resides where an input file will be executed, for example, on an aircraft. In embodiments, the data loader device 120 is permanently installed on the aircraft. In another embodiment, the data loader device 120 is a portable data loader. In embodiments, the data loader device 120 does not require connectivity to validate the input file using at least the crate file.

The communication network 111 may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, communication network 111 may include a cellular telephone, a 902.11, 902.16, 902.20, and/or WiMax network. Further, the communication network 104 may include a public network, such as the Internet, a private network, such as an intranet, or combinations thereof, and may utilize a variety of networking protocols now available or later developed including, but not limited to TCP/IP based networking protocols.

As illustrated in FIG. 2, the exemplary apparatus 110 may comprise processor 202, memory 201, input-output circuitry 203, communications circuitry 205, and crate tool circuitry 204. The apparatus 110 may be configured to execute the operations described herein. Although some of these components 201-205 are described with respect to their functional capabilities, it should be understood that the particular implementations necessarily include the use of particular hardware to implement such functional capabilities. It should also be understood that certain of these components 201-205 may include similar or common hardware. For example, two sets of circuitry may both leverage use of the same processor, network interface, storage medium, or the like to perform their associated functions, such that duplicate hardware is not required for each set of circuitry.

The use of the term "circuitry" as used herein with respect to components of the apparatus 110 therefore includes particular hardware configured to perform the functions associated with respective circuitry described herein. Of course, while the term "circuitry" should be understood broadly to include hardware, in some embodiments, circuitry may also include software for configuring the hardware. For example, in some embodiments, "circuitry" may include processing circuitry, storage media, network interfaces, input-output devices, and other components. In some embodiments, other elements of the apparatus 110 may provide or supplement the functionality of particular circuitry. For example, the processing circuitry 202 may provide processing functionality, memory 204 may provide storage functionality, and communications circuitry 205 may provide network interface functionality, among other features.

In some embodiments, the processor 202 (and/or co-processor or any other processing circuitry assisting or otherwise associated with the processor) may be in communication with the memory 201 via a bus for passing information among components of the apparatus. The memory 201 may be non-transitory and may include, for example, one or more volatile and/or non-volatile memories. For example, the memory 201 may be an electronic storage device (e.g., a computer readable storage medium). In another example, the memory 201 may be a non-transitory computer-readable storage medium storing computer-executable program code instructions that, when executed by a computing system, cause the computing system to perform the various operations described herein. The memory 201 may be configured to store information, data, content, signals applications, instructions (e.g., computer-executable program code instructions), or the like, for enabling the apparatus 110 to carry out various functions in accordance with example embodiments of the present disclosure. It will be understood that the memory 201 may be configured to store partially or wholly any electronic information, data, data structures, embodiments, examples, figures, processes, operations, techniques, algorithms, instructions, systems, apparatuses, methods, or computer program products described herein, or any combination thereof.

The processor 202 may be embodied in a number of different ways and may, for example, include one or more processing devices configured to perform independently. Additionally or alternatively, the processor 202 may include one or more processors configured in tandem via a bus to enable independent execution of instructions, pipelining, multithreading, or a combination thereof. The use of the term "processor" may be understood to include a single core processor, a multi-core processor, multiple processors internal to the apparatus, remote or "cloud" processors, or a combination thereof.

In an exemplary embodiment, the processor circuitry 202 may be configured to execute instructions stored in the memory 201 or otherwise accessible to the processor 202 . Alternatively or additionally, the processor 202 may be configured to execute hard-coded functionality. As such, whether configured by hardware or software methods, or by a combination of hardware with software, the processor 202 may represent an entity (e.g., physically embodied in circuitry) capable of performing operations according to an embodiment of the present disclosure while configured accordingly. As another example, when the processor 202 is embodied as an executor of program code instructions, the instructions may specifically configure the processor to perform the operations described herein when the instructions are executed.

In some embodiments, the apparatus 110 may include input-output circuitry 203 that may, in turn, be in communication with processor 202 to provide output to the user and, in some embodiments, to receive input such as a command provided by the user. The input-output circuitry 203 may comprise a user interface, such as a graphical user interface (GUI), and may include a display that may include a web user interface, a GUI application, a mobile application, a client device, or any other suitable hardware or software. In some embodiments, the input-output circuitry 203 may also include a keyboard, a mouse, a joystick, a display device, a display screen, a touch screen, touch areas, soft keys, a microphone, a speaker, or other input-output mechanisms. The processor 202, input-output circuitry 203 (which may utilize the processor 202), or both may be configured to control one or more functions of one or more user interface elements through computer-executable program code instructions (e.g., software, firmware) stored in a non-transitory computer-readable storage medium (e.g., memory 201). Input-output circuitry 203 is optional and, in some embodiments, the apparatus 1 10may not include input-output circuitry. For example, where the apparatus 110 does not interact directly with the user, the apparatus 110 may generate user interface data for display by one or more other devices with which one or more users directly interact and transmit the generated user interface data to one or more of those devices.

The communications circuitry 205 may be any device or circuitry embodied in either hardware or a combination of hardware and software that is configured to receive or transmit data from or to a network or any other device, circuitry, or module in communication with the apparatus 110. In this regard, the communications circuitry 205 may include, for example, a network interface for enabling communications with a wired or wireless communication network. For example, the communications circuitry 205 may include one or more network interface cards, antennae, buses, switches, routers, modems, and supporting hardware and/or software, or any other device suitable for enabling communications via a network. In some embodiments, the communication interface may include the circuitry for interacting with the antenna(s) to cause transmission of signals via the antenna(s) or to handle receipt of signals received via the antenna(s). These signals may be transmitted or received by the apparatus 110 using any of a number of Internet, Ethernet, cellular, satellite, or wireless technologies, such as IEEE 802.11, Code Division Multiple Access (CDMA), Global System for Mobiles (GSM), Universal Mobile Telecommunications System (UMTS), Long-Term Evolution (LTE), Bluetooth® v1.0 through v5.0, Bluetooth Low Energy (BLE), infrared wireless (e.g., IrDA), ultra-wideband (UWB), induction wireless transmission, Wi-Fi, near field communications (NFC), Worldwide Interoperability for Microwave Access (WiMAX), radio frequency (RF), RFID, or any other suitable technologies.

In some embodiments, communications circuitry 205 may comprise hardware components designed or configured to receive as input, an input file to generate a corresponding crate file.

The crate tool circuitry 204 includes hardware components designed or configured to receive, process, generate, and transmit data, such as the input file, the input file signature, the public certificate associated with the input file, the CRL, the timestamp request file, and the crate file. In some embodiments, the crate tool circuitry 204 may be in communication with the communications circuitry 205 and thus configured to receive data from the communications circuitry 205. As described above and as will be appreciated based on this disclosure, embodiments of the present disclosure may be configured as systems, apparatuses, methods, mobile devices, backend network devices, computer program products, other suitable devices, and combinations thereof. Accordingly, embodiments may comprise various means including entirely of hardware or any combination of software with hardware. Furthermore, embodiments may take the form of a computer program product on at least one non-transitory computer-readable storage medium having computer-readable program instructions (e.g., computer software) embodied in the storage medium. Any suitable computer-readable storage medium may be utilized including non-transitory hard disks, CD-ROMs, flash memory, optical storage devices, or magnetic storage devices. As will be appreciated, any computer program instructions and/or other type of code described herein may be loaded onto a computer, processor or other programmable apparatus's circuitry to produce a machine, such that the computer, processor, or other programmable circuitry that executes the code on the machine creates the means for implementing various functions, including those described herein.

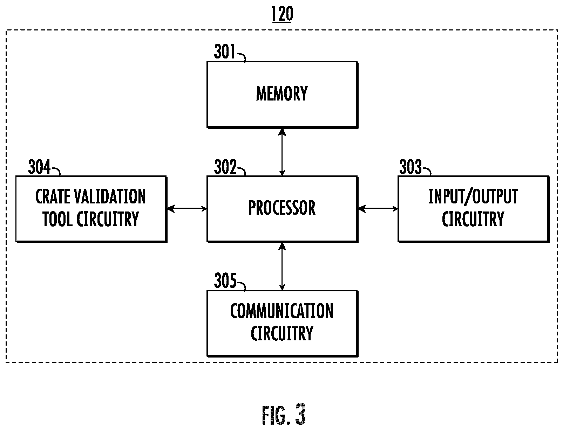

Referring to FIG. 3, the exemplary apparatus 120 may include processor 302, memory 301, input-output circuitry 303, communications circuitry 305, and crate validation tool circuitry 304. The apparatus 120 may be configured to execute the operations described herein. Although some of these components 301-305 are described with respect to their functional capabilities, it should be understood that the particular implementations necessarily include the use of particular hardware to implement such functional capabilities. It should also be understood that certain of these components 301-305 may include similar or common hardware. For example, two sets of circuitry may both leverage use of the same processor, network interface, storage medium, or the like to perform their associated functions, such that duplicate hardware is not required for each set of circuitry.

The use of the term "circuitry" as used herein with respect to components of the apparatus 120 therefore includes particular hardware configured to perform the functions associated with respective circuitry described herein. Of course, while the term "circuitry" should be understood broadly to include hardware, in some embodiments, circuitry may also include software for configuring the hardware. For example, in some embodiments, "circuitry" may include processing circuitry, storage media, network interfaces, input-output devices, and other components. In some embodiments, other elements of the apparatus 120 may provide or supplement the functionality of particular circuitry. For example, the processing circuitry 302 may provide processing functionality, memory 304 may provide storage functionality, and communications circuitry 305 may provide network interface functionality, among other features.

In some embodiments, the processor 302 (and/or co-processor or any other processing circuitry assisting or otherwise associated with the processor) may be in communication with the memory 301 via a bus for passing information among components of the apparatus. The memory 301 may be non-transitory and may include, for example, one or more volatile and/or non-volatile memories. For example, the memory 301 may be an electronic storage device (e.g., a computer readable storage medium). In another example, the memory 301 may be a non-transitory computer-readable storage medium storing computer-executable program code instructions that, when executed by a computing system, cause the computing system to perform the various operations described herein. The memory 301 may be configured to store information, data, content, signals applications, instructions (e.g., computer-executable program code instructions), or the like, for enabling the apparatus 120 to carry out various functions in accordance with example embodiments of the present disclosure. It will be understood that the memory 301 may be configured to store partially or wholly any electronic information, data, data structures, embodiments, examples, figures, processes, operations, techniques, algorithms, instructions, systems, apparatuses, methods, or computer program products described herein, or any combination thereof.

The processor 302 may be embodied in a number of different ways and may, for example, include one or more processing devices configured to perform independently. Additionally or alternatively, the processor 302 may include one or more processors configured in tandem via a bus to enable independent execution of instructions, pipelining, multithreading, or a combination thereof. The use of the term "processor" may be understood to include a single core processor, a multi-core processor, multiple processors internal to the apparatus, remote or "cloud" processors, or a combination thereof.

In an exemplary embodiment, the processor circuitry 302 may be configured to execute instructions stored in the memory 301 or otherwise accessible to the processor 302. Alternatively or additionally, the processor 302 may be configured to execute hard-coded functionality. As such, whether configured by hardware or software methods, or by a combination of hardware with software, the processor 302 may represent an entity (e.g., physically embodied in circuitry) capable of performing operations according to an embodiment of the present disclosure while configured accordingly. As another example, when the processor 302 is embodied as an executor of program code instructions, the instructions may specifically configure the processor to perform the operations described herein when the instructions are executed.

In some embodiments, the apparatus 120 may include input-output circuitry 303 that may, in turn, be in communication with processor 302 to provide output to the user and, in some embodiments, to receive input such as a command provided by the user. The input-output circuitry 303 may comprise a user interface, such as a graphical user interface (GUI), and may include a display that may include a web user interface, a GUI application, a mobile application, a client device, or any other suitable hardware or software. In some embodiments, the input-output circuitry 303 may also include a keyboard, a mouse, a joystick, a display device, a display screen, a touch screen, touch areas, soft keys, a microphone, a speaker, or other input-output mechanisms. The processor 302, input-output circuitry 303 (which may utilize the processor 302), or both may be configured to control one or more functions of one or more user interface elements through computer-executable program code instructions (e.g., software, firmware) stored in a non-transitory computer-readable storage medium (e.g., memory 301). Input-output circuitry 303 is optional and, in some embodiments, the apparatus 120 may not include input-output circuitry. For example, where the apparatus 120 does not interact directly with the user, the apparatus 120 may generate user interface data for display by one or more other devices with which one or more users directly interact and transmit the generated user interface data to one or more of those devices.

The communications circuitry 305 may be any device or circuitry embodied in either hardware or a combination of hardware and software that is configured to receive or transmit data from or to a network or any other device, circuitry, or module in communication with the apparatus 120. In this regard, the communications circuitry 305 may include, for example, a network interface for enabling communications with a wired or wireless communication network. For example, the communications circuitry 305 may include one or more network interface cards, antennae, buses, switches, routers, modems, and supporting hardware and/or software, or any other device suitable for enabling communications via a network. In some embodiments, the communication interface may include the circuitry for interacting with the antenna(s) to cause transmission of signals via the antenna(s) or to handle receipt of signals received via the antenna(s). These signals may be transmitted or received by the apparatus 120 using any of a number of Internet, Ethernet, cellular, satellite, or wireless technologies, such as IEEE 802.11, Code Division Multiple Access (CDMA), Global System for Mobiles (GSM), Universal Mobile Telecommunications System (UMTS), Long-Term Evolution (LTE), Bluetooth® v1.0 through v5.0, Bluetooth Low Energy (BLE), infrared wireless (e.g., IrDA), ultra-wideband (UWB), induction wireless transmission, Wi-Fi, near field communications (NFC), Worldwide Interoperability for Microwave Access (WiMAX), radio frequency (RF), RFID, or any other suitable technologies.

In some embodiments, processor 302 may comprise hardware for executing the input file in an equipment system after the input file has be determined to be valid.

The crate validation tool circuitry 304 includes hardware components designed or configured to receive, process, generate, and transmit data, such as the crate file which comprises a time stamp response, a public certificate, a CRL, and an input file signature. In some embodiments, the crate validation tool circuitry 304 may be in communication with the communications circuitry 305 and thus configured to receive data from the communications circuitry 305. As described above and as will be appreciated based on this disclosure, embodiments of the present disclosure may be configured as systems, apparatuses, methods, mobile devices, backend network devices, computer program products, other suitable devices, and combinations thereof. Accordingly, embodiments may comprise various means including entirely of hardware or any combination of software with hardware. Furthermore, embodiments may take the form of a computer program product on at least one non-transitory computer-readable storage medium having computer-readable program instructions (e.g., computer software) embodied in the storage medium. Any suitable computer-readable storage medium may be utilized including non-transitory hard disks, CD-ROMs, flash memory, optical storage devices, or magnetic storage devices. As will be appreciated, any computer program instructions and/or other type of code described herein may be loaded onto a computer, processor or other programmable apparatus's circuitry to produce a machine, such that the computer, processor, or other programmable circuitry that executes the code on the machine creates the means for implementing various functions, including those described herein.

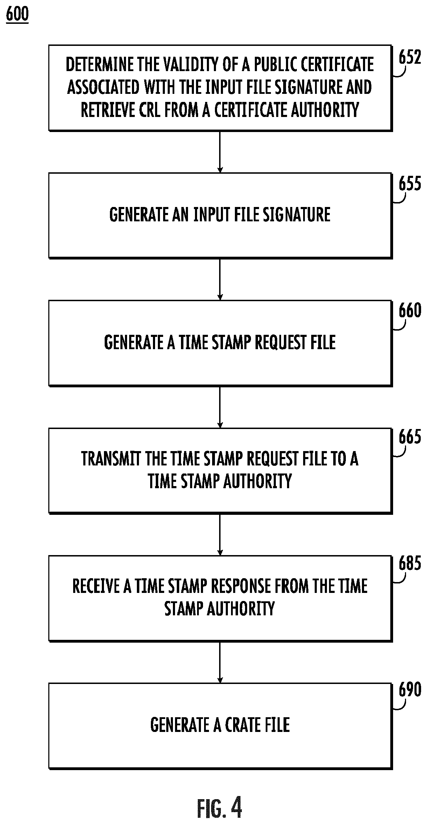

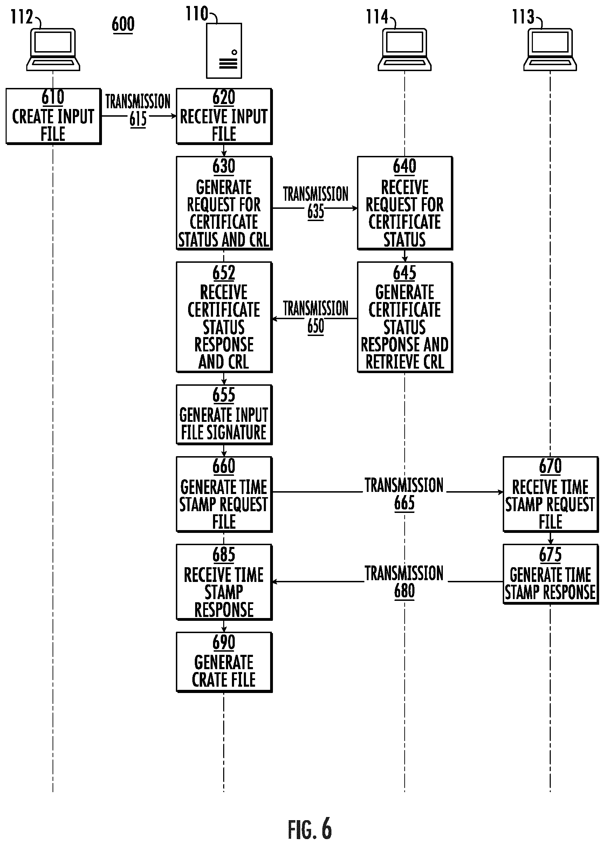

Referring to FIG. 4 and FIG. 6, a flowchart illustrating exemplary operations of a crate generator system 110 and an example data flow 600 attributable to generating a crate file is provided. The operations described in connection with FIG. 4 may, for example, be performed by one or more components described with reference to apparatus 110 shown in FIG. 2 (e.g., by or through the use of one or more of processor 202, memory 201, input-output circuitry 203, communications circuitry 205, crate tool circuitry 204, any other suitable circuitry, and any combination thereof); by any other component described herein; or by any combination thereof.

In exemplary data flow 600, an input author device 112 creates 610 an input file and transmits 615 the input file to the crate generator system 110.

In embodiments, data flow 600 continues with a crate generator system 110 receiving 620 the input file.

In embodiments, the validity of the public certificate is determined by an online certificate status protocol (OCSP) depicted in blocks 630-652, as described below.

In embodiments, data flow 600 continues with the crate generator system 110 generating 630 a request for certificate status and a certificate revocation list (CRL) and transmits 635 the request to a certificate authority device 114.

In embodiments, data flow 600 continues with the certificate authority device 114 receiving 640 the request. In embodiments, the certificate authority device 114 generates 645 a certificate status response, retrieves the CRL, and transmits 650 both the certificate status response and CRL to the crate generator system 110. In embodiments, the certificate status response indicates whether the public certificate associated with the input file is valid or revoked. In embodiments, data flow 600 continues with the crate generator system 110 receiving 652 the certificate status response and the CRL from the certificate authority device.

In embodiments, the validity of the public certificate is determined by querying the CRL for the public certificate. If the public certificate does not appear within the CRL, then the public certificate has not been revoked and is considered valid.

The crate generator system 110 generates 655 an input file signature associated with the input file by identifying an author of the input file and associating an identity of the author with the input file.

In embodiments, data flow 600 continues with the crate generator system 110 generating 660 a time stamp request file. In embodiments, the time stamp request file comprises the input file signature, the public certificate, and the CRL.

In embodiments, data flow 600 continues with the crate generator system 110 transmitting 665 the time stamp request file to a time stamp authority device 113. In embodiments, data flow 600 continues with the time stamp authority device 113 receiving 670 the time stamp request file. The time stamp authority device 113 generates 657 a time stamp response and transmits 680 the time stamp response to the crate generator system 110. In embodiments, the time stamp response comprises at least in part a time stamp token.

In embodiments, data flow 600 continues with the crate generator system 110 receiving 685 the time stamp response the time stamp authority device 113.

In embodiments, data flow 600 continues with the crate generator system 110 generating 690 a crate file. In embodiments, the crate file comprises the input file, the input file signature, the public certificate, the CRL, and the time stamp response. In embodiments, the crate file is generated by compressing the input file, the input file signature, the public certificate, the CRL, and the time stamp response together in a compressed file. In embodiments, the crate file is generated by creating a zip file. In embodiments, the crate file is generated by creating a folder. In embodiments, the input file signature, the public certificate, the CRL, and/or the time stamp response is represented in base 64 format.

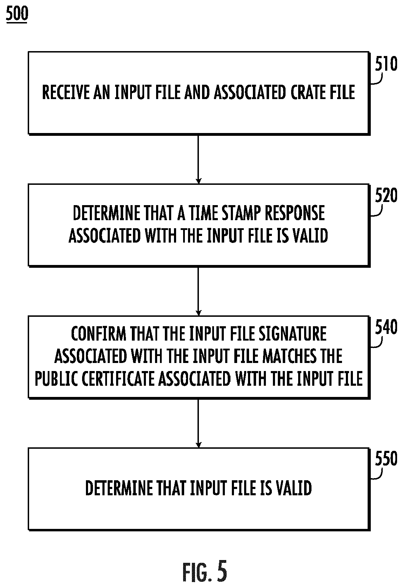

Referring to FIG. 5, a flowchart illustrating exemplary operations of a data loader device 120 is provided. The operations described in connection with FIG. 5 may, for example, be performed by one or more components described with reference to apparatus 120 shown in FIG. 3 (e.g., by or through the use of one or more of processor 302, memory 301, input-output circuitry 303, communications circuitry 305, crate tool circuitry 304, any other suitable circuitry, and any combination thereof); by any other component described herein; or by any combination thereof. The operations described in connection with FIG. 5 may be performed without network connectivity (e.g., the operations do not require transmission of data to nor receipt of data from an entity outside of the aircraft). In embodiments, the data loader device 120 is able to validate the input file based on the data structures contained in the crate file without network connectivity.

In embodiments, an exemplary data flow 500 begins with a data loader device 120 receiving 510 an input file from the crate generator system 110. In embodiments, the input file is received by the data loader device 120 from the crate generator system 110 through a communication network 111 if there is connectivity. In embodiments, the input file is loaded onto a non-transitory computer-readable storage medium by the crate generator system 110. In embodiments, the input file from the non-transitory computer-readable storage medium embodying the input file is loaded onto the data loader device 120 in the case of operation in disconnected environments. Suitable computer-readable storage medium that may be utilized include non-transitory hard disks, CD-ROMs, flash memory, optical storage devices, or magnetic storage devices.

In embodiments, exemplary data flow 500 continues with the data loader device 120 determining 520 that a time stamp response associated with the input file is valid. In embodiments, the data loader device 120 determines that the time stamp response is valid based at least in part on a digital signature of a time stamp authority used to generate the time stamp response.

In embodiments, exemplary data flow 500 continues with the data loader device 120 comparing 540 the input file signature with the public certificate associated with the input file to determine if they match.

In embodiments, exemplary data flow 500 continues with the data loader device 120, upon determining that the public certificate associated with the input file does not appear within the CRL associated with the input file, and upon confirming that an input file signature associated with the input file matches the public certificate associated with the input file, determining 550 that the input file is valid. In embodiments, the data loader device 120 proceeds to execute the input file or allow execution of the input file on the aircraft system.

## Claims

1. A computer-implemented method, the method comprising:
receiving an input file;
determining a validity of a public certificate associated with the input file signature and retrieve a certificate revocation list (CRL) from a certificate authority;
generating an input file signature associated with the input file;
generating a time stamp request file comprising the input file signature, the public certificate, and the CRL;
transmitting the time stamp request file to a time stamp authority;
receiving a time stamp response from the time stamp authority, wherein the time stamp response comprises a time stamp token;
generating a crate file comprising the input file, the input file signature, the public certificate, the CRL, and the time stamp response; and
in response validating the input file based on the crate file, executing the input file.

2. The method of claim 1, the determining the validity of the public certificate comprising determining the validity of the public certificate by employing an online certificate status protocol (OCSP).

3. The method of claim 1, the determining the validity of the public certificate comprising determining the validity of the public certificate by querying a certificate revocation list (CRL).

4. The method of any one of claims 1-3, the receiving the input file comprising receiving a loadable software aircraft part (LSAP).

5. The method of any one of claims 1-4, the generating the crate file comprising compressing the input file into a compressed file.

6. The method of any one of claims 1-4, the generating the crate file comprising compressing the public certificate into a compressed file.

7. The method of any one of claims 1-4, the generating the crate file comprising compressing the CRL into a compressed file.

8. The method of any one of claims 1-4, the generating the crate file comprising compressing the time stamp response into a compressed file.

9. The method of any one of claims 1-8, wherein the input file signature, the public certificate, the CRL, or the time stamp response is in base 64 format.

10. The method of any one of claims 1-9, the executing the input file comprising executing the input file via a data loader device.

11. The method of any one of claims 1-9, the executing the input file comprising executing the input file via an aircraft system.

12. The method of any one of claims 1-9, the executing the input file comprising executing a loadable software aircraft part (LSAP).

13. The method of any one of claims 1-9, the executing the input file comprising executing a loadable software aircraft part (LSAP) via an aircraft system.

14. An apparatus comprising at least one processor and at least one memory including computer program code, the at least one memory and the computer program code configured to, with the at least one processor, cause the apparatus to perform any one of the methods of claims 1-13.

15. A computer program product comprising at least one non-transitory computer-readable medium having computer-readable program instructions stored therein, the computer-readable program instructions comprising instructions, which when performed by an apparatus, are configured to cause the apparatus to at least perform any one of the methods of claims 1-13.
